# EUROPÄISCHE PATENTSCHRIFT

(11) **EP 3 573 883 B1**
(45) Veröffentlichungstag und Bekanntmachung des Hinweises auf die Patenterteilung: **07.08.2024**
(21) Anmeldenummer: 18752413.7
(22) Anmeldetag: 05.06.2018
(51) Int. Cl.: B62J 1/28

(54) **RÜCKENSTÜTZE MIT EINER HALTERUNG, SATTEL MIT EINER RÜCKENSTÜTZE UND GERÄT MIT EINEM SATTEL**
BACKREST HAVING A HOLDER, SADDLE HAVING A BACKREST, AND DEVICE HAVING A SADDLE
SOUTIEN LOMBAIRE COMPRENANT UN MOYEN DE FIXATION, SELLE POURVUE D'UN SOUTIEN LOMBAIRE ET APPAREIL POURVU DE CETTE SELLE

(30) Priorität: 04.11.2017 AT 601212017
(43) Veröffentlichungstag der Anmeldung: 04.12.2019
(73) Patentinhaber: B&T Innotec Germany GmbH, 72406 Bisingen (DE)
(72) Erfinder: Bogenschütz, Josef, 72406 Bisingen (DE); Tscheinig, Andreas, 8101 Gratkorn (AT)
(74) Vertreter: Castell, Klaus
(86) Internationale Anmeldenummer: PCT/DE2018/000170
(87) Internationale Veröffentlichungsnummer: WO 2019/086059

(56) Entgegenhaltungen:
- BE-A- 403 805
- CN-A- 103 879 481
- CN-A- 106 608 330
- CN-U- 203 306 183
- CN-U- 204 309 934
- CN-U- 205 359 905
- CN-U- 205 524 626
- CN-Y- 2 622 050
- JP-A- 2011 011 607
- KR-B1- 101 040 331
- US-A- 4 313 639
- US-A- 5 027 795
- US-A- 5 416 936
- US-A- 5 887 943
- US-A1- 2007 249 975
- US-A1- 2014 336 550
- US-A1- 2015 130 944

## Beschreibung

Die Erfindung betrifft ein mit einer Pedale angetriebenes Gerät mit einem Sattel mit einer Rückenstütze mit einer Halterung zur Befestigung am Gerät und einer Anlagefläche zum Abstützen einer das Gerät bedienenden Person.

Aus der AT 516985 A2 ist eine Absperrvorrichtung für Fahrräder bekannt, die eine leicht gebogene Platte mit einer gepolsterten Anlagefläche aufweist. Diese Anlagefläche hat einen gebogenen mittleren Bereich und beidseitig davon stärker ausgebildete Randbereiche. Diese Sattelstütze ist somit mit einem gebogenen Anlagebereich an einen Lendenbereich eines Fahrradfahrers angepasst, um eine möglichst komfortable Anlage auf einer großen Fläche zwischen dem Rücken und der Rückenstütze zu erreichen. Der vom Fahrradfahrer auf die Rückenstütze aufgebrachte Druck kann somit komfortabel übertragen werden, ohne dass mit Druckstellen am Rücken des Fahrradfahrers zu rechnen wäre.

Die CN 2 622 050 Y beschreibt eine Rückenstütze mit einer Halterung an der ein oder zwei Kugelsegmente federnd gelagert sind. CN 2 622 050 Y offenbart den Oberbegriff des Anspruchs 1.

Die CN 106 608 330 A beschreibt eine gebogene Rückenanlagefläche und die CN 103 879 481 A beschreibt mehrere gebogene Flächen als Anlage. Außerdem sind spezielle Massagekugeln aus den Entgegenhaltungen BE 403 805A, US 2014/336550A1, US 5 416 936 A und US 2007/249975 A1 bekannt.

Ausgehend von diesem Stand der Technik liegt der Erfindung die Aufgabe zu Grunde, ein mit einer Pedale angetriebenes Gerät mit einem Sattel mit einer Rückenstütze, wie insbesondere Fahrräder, Spinning oder Indoor-Bikes oder andere mit einer Pedale angetriebene Fahrzeuge, weiter zu entwickeln.

Diese Aufgabe wird mit einem mit einer Pedale angetriebenen Gerät mit den Merkmalen des Patentanspruchs 1 gelöst.

Konstruktiv vorteilhaft ist es, dass mindestens eine Anlagefläche der Rückenstütze die Oberfläche einer Kugel oder einer Walze ist.

Dabei ist die Kugel oder die Walze bzw. deren Anlagefläche um eine Achse beweglich gelagert. Vorteilhaft ist eine waagerechte oder eine senkrechte Achse, wobei je nach Form und Ausbildung der Anlagefläche unterschiedliche Achsausrichtungen vorteilhaft sein können.

Die Rückenstütze weist mindestens zwei beabstandete Anlageflächen auf. Dies ermöglicht es beispielsweise, beidseitig des Rückgrates einer das Gerät bedienenden Person jeweils eine oder mehrere Anlageflächen vorzusehen. Insbesondere bei walzensegmentförmigen Anlageflächen können sich diese jedoch auch über die Mitte des Geräts oder der das Gerät bedienenden Person erstrecken.

Der Abstand der Anlageflächen zueinander kann durch die Konstruktion der Rückenstütze fixiert sein. Vorteilhaft ist es jedoch, wenn der Abstand der Anlageflächen zueinander einstellbar ist und in der eingestellten Position fixierbar ist.

Da mindestens zwei beabstandete Anlageflächen vorgesehen sind, können diese Anlageflächen auch beidseitig der Halterung angeordnet sein. Besonders vorteilhaft ist dabei eine symmetrische Anordnung zur Übertragung der Kraft über die Anlagefläche auf die Halterung.

Der Grundkörper kann elastisch an der Halterung befestigt sein. Eine individuelle Anpassung wird jedoch dadurch erreicht, dass die mindestens eine Anlagefläche elastisch zum Grundkörper gelagert ist.

Die mindestens eine Anlagefläche selbst ist elastisch ausgebildet. Dies erlaubt ein Nachgeben der Anlagefläche je nach Belastung.

Besonders vorteilhaft ist es, wenn mehrere Anlageflächen zusammen elastisch zum Grundkörper gelagert sind. Dies ermöglicht es, mit einer elastischen Lagerung mehrere Anlageflächen elastisch auszubilden.

Um den Grundkörper in einer geeigneten Position relativ zur Halterung optimal zu positionieren und sicher zu halten, wird vorgeschlagen, dass der Grundkörper mindestens zwei Hebelarme aufweist, die über ein Gelenk einstellbar miteinander verbunden sind.

Vorteilhaft ist es auch, wenn der Grundkörper mindestens zwei Hebelarme aufweist und die Länge mindestens eines der Hebelarme einstellbar ist. Dadurch kann die Position der Anlagefläche relativ zur Halterung individuell eingestellt werden.

Der Grundkörper kann an der Sattelstange befestigt werden. Vorteilhaft ist es jedoch, wenn der Grundkörper alternativ oder kumulativ hierzu eine Sattelbefestigungseinrichtung zur Befestigung an einem Sattel aufweist. Dies ermöglicht es, die Anlagefläche entweder auf einfache Art und Weise am Sattel zu befestigen oder vorzugsweise über eine Zwei-Punkt-Befestigung am Sattel und der Sattelstange.

Die Sattelbefestigungseinrichtung hat vorzugsweise eine Längserstreckung, die derart mit dem Sattel zusammenwirkt, dass sie durch den Sattel parallel zum Sattel gehalten wird. Dabei kann eine Drehbewegung um die Achse einer Sattelstange durch Anschläge der Sattelbefestigungseinrichtung am Sattel verhindert werden. Eine weitere Befestigung an der Sattelstange ermöglicht es, eine Drehung der Sattelbefestigungseinrichtung um die Achse ihrer Längserstreckung zu vermeiden.

Daher wird vorgeschlagen, dass der Grundkörper als bevorzugte Ausführungsvariante eine Sattelstangenbefestigungseinrichtung zur Befestigung an einer Sattelstange aufweist.

Eine stabile und dynamische Befestigung kann dadurch erreicht werden, dass eine Verbindungsstrebe mit der Sattelbefestigungseinrichtung und der Sattelstangenbefestigungseinrichtung gelenkig verbunden ist.

Wenn die Rückenstütze mehrere Anlageflächen und zwischen diesen Anlageflächen eine Halterung aufweist, kann mit der Halterung an einem definierten Ort eine Flasche, eine Box, ein Gepäckträger oder eine ähnliche Einrichtung befestigt werden.

Weitere Funktionen und vorteilhafte Ausbildungsvarianten ergeben sich, wenn die Rückenstütze eine Sattelabdeckung und/oder ein Fahrradschloss aufweist. Dabei kann die spezielle Ausbildung der Anlagefläche nicht nur für eine Anlage am Rücken der die Pedale bedienenden Person ausgebildet sein, sondern auch dazu, die Oberseite des Sattels gegen Regen abzudecken. Dabei ist es vorteilhaft, wenn Grundkörper und Anlageflächen so zusammenwirken, dass sie so gelagert sind, dass mit ihnen die Oberseite eines Sattels abgedeckt werden kann.

Besonders vorteilhaft ist es, wenn die Rückenstütze ein Fahrradlicht aufweist. Dieses Fahrradlicht kann ein aktiv strahlendes, elektrisches Licht sein oder ein Lichtreflektor. Dabei können die rückwärtigen Flächen der Anlagefläche bzw. der die Anlagefläche bildenden Körper und der Grundkörper der Befestigung des Fahrradlichtes dienen.

Eine Weiterbildung sieht vor, dass die Rückenstütze einen Sender aufweist. Dieser Sender kann Ortsdaten der Rückenstütze an einen Empfänger weiterleiten, um den Ort des Geräts oder zumindest der Rückenstütze nach einem Diebstahl ermitteln zu können. Kumulativ oder alternativ können jedoch auch Daten zu einer mechanischen Verformung oder einem Druck an der Anlagefläche aufgenommen und gesendet werden, um die Bewegung der die Pedale bedienenden Person analysieren zu können.

Eine Weiterbildung sieht vor, dass die Rückenstütze einen Sensor und einen Druckzylinder aufweist, um die Position der Anlagefläche zu verändern, um dadurch den Anpressdruck der Anlagefläche am Rücken eines Nutzers zu variieren. Dies ermöglicht es, den Anpressdruck zu steuern oder zu regeln, indem über den Druckzylinder auf die Anlagefläche gedrückt wird, sodass deren Position verändert wird.

Die Rückenstütze kann - vorzugsweise rastend - gelenkig zum Sattel angeordnet sein. Dies ermöglicht eine im Wesentlichen waagerechte Sattelverlängerung. Dadurch kann eine auf dem Sattel sitzende Person, insbesondere bei steilen Bergfahrten nach hinten auf die Sattelverlängerung rutschen. Die Sattelverlängerung kann jedoch auch so stabil ausgebildet sein, dass dort eine zweite Person sitzen kann oder die Sattelverlängerung kann wie ein Gepäckträger genutzt werden.

Vorteilhafte Ausführungsvarianten werden in der Zeichnung beschrieben und im Folgenden näher erläutert. Es zeigt
- Figur 1: eine Ansicht schräg von hinten auf eine Rückenstütze mit zwei kugelsegmentförmigen Anlageflächen,
- Figur 2: eine seitliche Ansicht der in Figur 1 gezeigten Rückenstütze,
- Figur 3: eine Ansicht von hinten auf die in den Figuren 1 und 2 gezeigte Rückenstütze,
- Figur 4: eine seitliche Ansicht einer Sattelstangenbefestigung mit Sattelbefestigung,

- Figur 5: eine seitliche Ansicht einer Rückenstütze mit Halterung,
- Figur 6: eine Ansicht einer Rückenstütze mit vier kugelsegmentförmigen Anlageflächen,
- Figur 7: eine Ansicht einer Rückenstütze mit sechs kugelsegmentförmigen Anlageflächen,
- Figur 8: eine Rückenstütze mit vier Kugeln,
- Figur 9: eine Rückenstütze mit zwei Walzen,
- Figur 10: eine Rückenstütze mit waagerecht gelagerten Kugeln und
- Figur 11: eine Rückenstütze mit einem Druckzylinder.

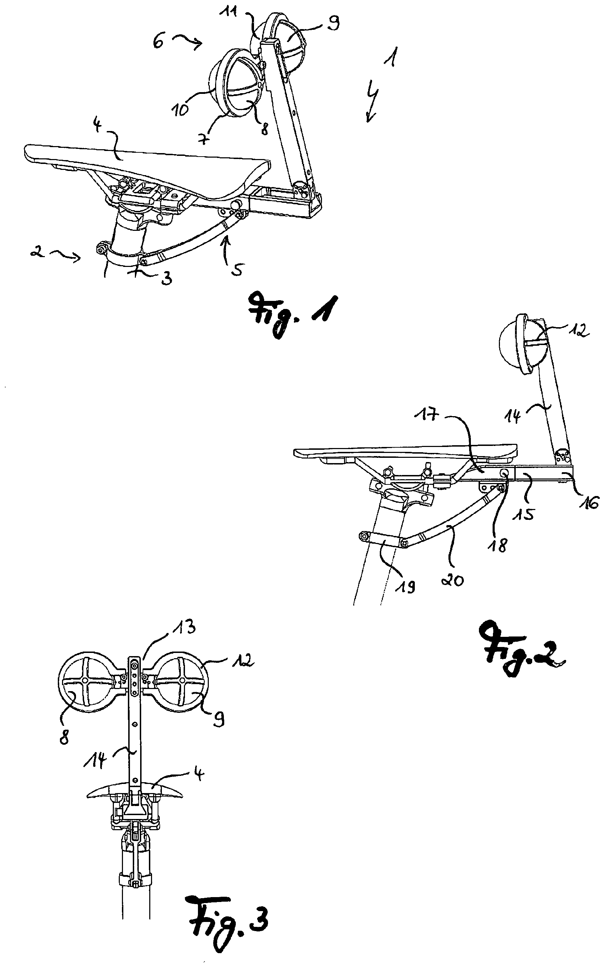

Die in Figur 1 gezeigte Rückenstütze 1 ist an einem mit einer Pedale angetriebenen Gerät 2 angebracht, von dem nur die Sattelstange 3 und der Sattel 4 gezeigt sind.

Die Rückenstütze 1 weist eine Halterung 5 zur Befestigung am Gerät 2 und eine Anlagefläche 6 zum Abstützen einer das Gerät bedienenden Person (nicht gezeigt) auf. Diese das Gerät bedienende Person sitzt auf dem Sattel und die Anlagefläche 6 ist so eingestellt, dass sie am Rücken der Person anliegt.

Diese Anlagefläche 6 weist einen Grundkörper 7 auf, an dem zwei Kugeln 8 und 9 befestigt sind, die jeweils eine kugelsegmentförmige Anlagefläche 10, 11 aufweisen. Die Kugeln 8 und 9 können wie in Figur 2 gezeigt, in einem Käfig 12 festgehalten werden oder darin relativ zum Käfig drehbeweglich angeordnet sein.

Der Abstand der Kugeln 8 und 9 und damit auch der Anlageflächen 10 und 11 zueinander ist mit einer geschraubten oder rastenden Mechanik 13, wie in Figur 3 gezeigt, individuell einstellbar. Außerdem kann mit der Mechanik 13 auch der Abstand der Kugeln 8 und 9 und damit der Anlageflächen 10 und 11 relativ zum Sattel 4 und zueinander eingestellt werden. Die Verbindung des Käfigs 12 zum oberen Hebelarm 14 oder der Käfig 12 selber können so ausgebildet sein, dass die beidseitig der Halterung 5 angeordneten Anlageflächen 10 und 11 elastisch zum Grundkörper 7 gelagert sind. Außerdem können die Anlageflächen 10 und 11 oder die Kugeln 8 und 9 elastisch ausgebildet sein. Beispielsweise durch eine flexible Ausbildung der Mechanik 13 können auch mehrere Anlageflächen 10 und 11 zusammen elastisch zum Grundkörper 7 gelagert sein.

Der Grundkörper 7 besteht aus einem oberen Hebelarm 14 und einem unteren Hebelarm 15, die über ein Gelenk 16 einstellbar beweglich und fixierbar verbunden sind.

Der untere Hebelarm 15 ist an einer Sattelbefestigungseinrichtung 17 derart befestigt, dass er nach hinten aus der Sattelbefestigungseinrichtung 17 herausgezogen und in die Sattelbefestigungseinrichtung 17 hineingeschoben werden kann, um den wirksamen Hebelarm des unteren Hebels 15 zu verstellen. Dafür kann der untere Hebelarm 15 in seiner Lage durch die Arretierung 18 fixiert werden.

Die Sattelbefestigungseinrichtung 17 und die Sattelstangenbefestigungseinrichtung 19 sind über einen Hebel 20 miteinander verbunden, der sowohl an der Sattelstangenbefestigungseinrichtung 19 als auch an der Sattelbefestigungseinrichtung 17 mit einem Gelenk 21 bzw. 22 angelenkt ist.

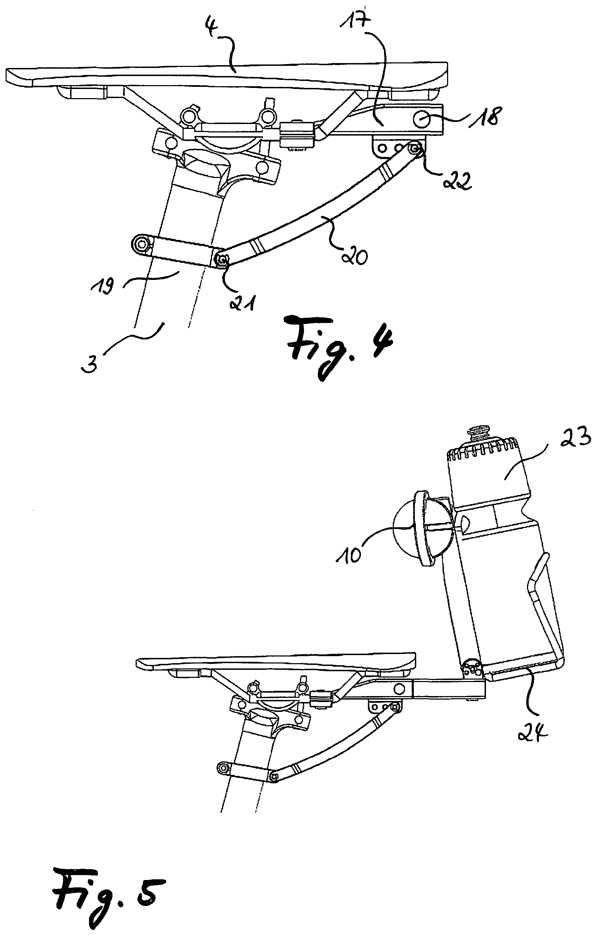

Die Figur 5 zeigt, wie eine Flasche 23 zwischen den Anlageflächen 10 und 11 in einer Halterung 24 gehalten ist. Diese Halterung könnte auch zum Halten einer Box, als Gepäckträger oder zum Halten eines Rücklichts (nicht gezeigt) ausgebildet sein.

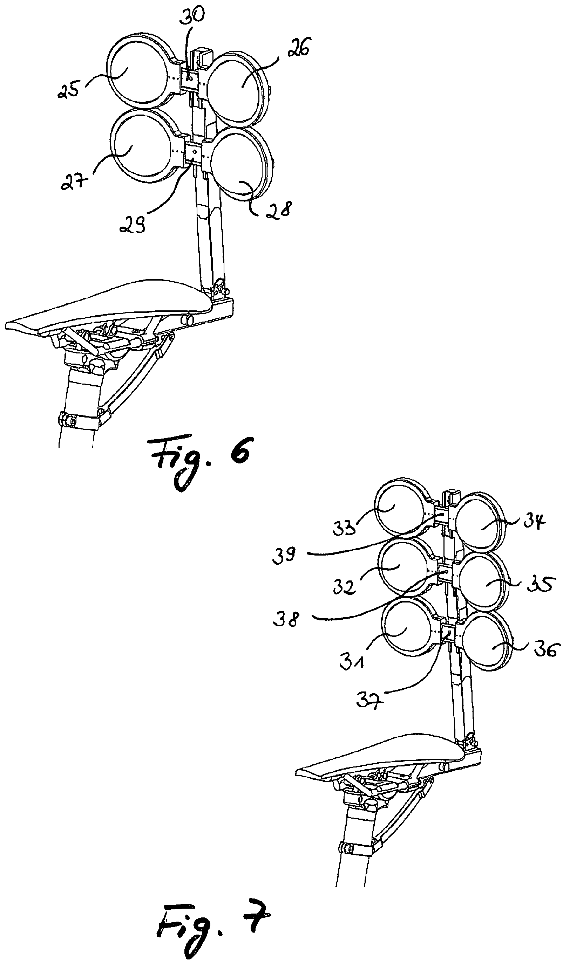

Die Figuren 6 und 7 zeigen, dass anstelle von zwei nebeneinander angeordneten Anlageflächen auch mehrere Anlageflächen übereinander, insbesondere als Quadrat oder Rechteck, angeordnet werden können. So zeigt die Figur 6 Anlageflächen 25, 26, 27 und 28, die wie die Anlageflächen 10 und 11 ausgebildet sind und in quadratischer Anordnung, aber über die Mechaniken 29 und 30 individuell verschiebbar und positionierbar sind.

Entsprechend sind auch die in Figur 7 gezeigten Anlageflächen 31 bis 36 durch die Mechaniken 37 bis 39 individuell einstellbar und fixierbar.

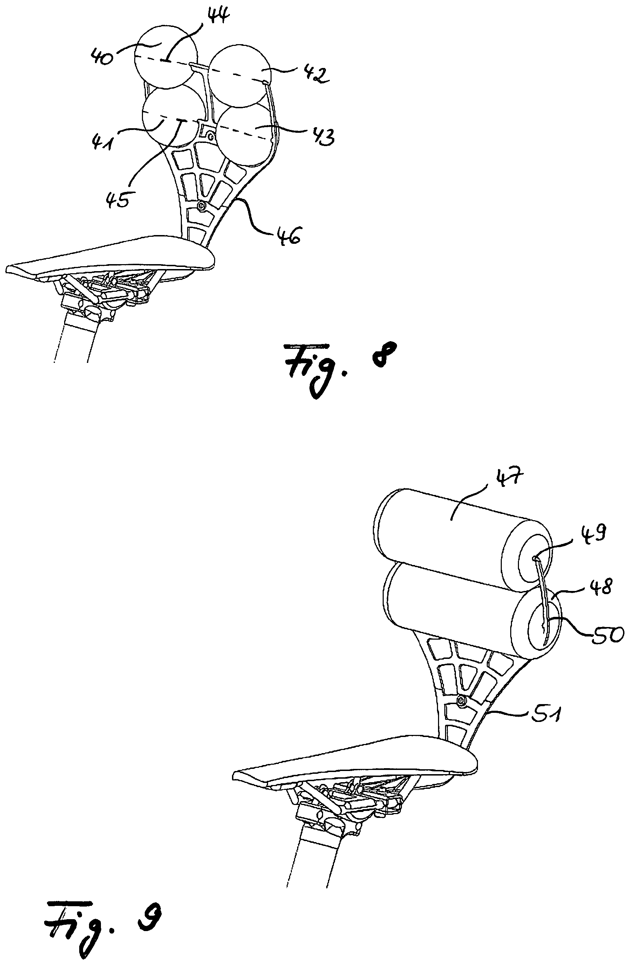

Die Figur 8 zeigt kugelförmige Anlageflächen 40 bis 43, die um Achsen 44 und 45 drehbar gelagert in dem Grundkörper 46 angeordnet sind.

Anstelle von Kugeln können auch Walzen 47 und 48 wie in Figur 9 gezeigt übereinander angeordnet sein, die vorzugsweise drehbeweglich um eine Achse 49 bzw. 50 gelagert an dem Grundkörper 51 angeordnet sind.

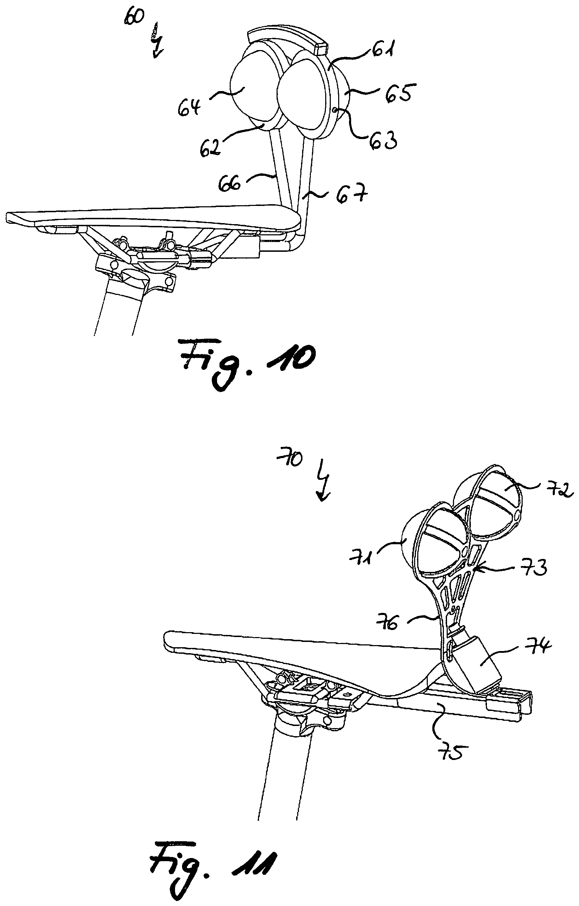

Die Figur 10 zeigt eine spezielle Ausführungsform einer Rückenstütze 60 mit in jeweils einem Ring 61, 62 um eine im Wesentlichen waagerechte Achse 63 gelagerten Kugeln 64, 65. Diese sind an zwei parallelen Streben 66, 67 gehalten, die eine begrenzte Verdrehung um eine senkrechte Achse und eine begrenztes Schwenken um eine waagerechte Achse ermöglichen.

Während die Figur 10 ein Ausführungsbeispiel für ein passives Ausweichen der Rückenstütze 60 mittels der Formgebung und der Materialwahl des Grundkörpers zeigt, zeigt die Figur 11 ein Ausführungsbeispiel einer Rückenstütze 70 für ein Verstellen der Winkellage der Anlagefläche der zwei Kugeln 71 und 72 durch eine Verformung des Grundkörpers 73 mittels eines Druckzylinders 74. Dieser Druckzylinder 74 ist im Ausführungsbeispiel zwischen einem unteren Hebelarm 75 und einen oberen Hebelarm 76 angeordnet, um den Winkel, in dem die Hebelarme 75 und 76 zueinander angeordnet sind, zu verändern. Der Druckzylinder kann passiv als Gasdruckfeder wirken oder aktiv pneumatisch oder hydraulisch gemäß einer Steuerung (nicht gezeigt).

In den Kugeln 71, 72 angeordnete Drucksensoren (nicht gezeigt) können einen Anpressdruck aufnehmen, der vom Nutzer auf die Anlageflächen aufgebracht wird, und diesen Druck über einen Sender (nicht gezeigt) an einen Empfänger weiterleiten. Der Anpressdruck kann aber auch dazu genutzt werden, den Druck am Druckzylinder 74 geregelt oder gesteuert einzustellen.

Dies ermöglicht es, je nach Anwendungsbereich individuell ausgebildete und individuell gelagerte und positionierte Anlageflächen zu verwenden, um mit der Rückenstütze einen vom Nutzer des mit der Pedale angetriebenen Geräts 2 aufgebrachten Druck aufzunehmen.

## Patentansprüche

1. Mit einer Pedale angetriebenes Gerät (2) mit einem Sattel (4) mit einer Rückenstütze mit einer Hal-
terung (5) zur Befestigung am Gerät (2) und mindestens zwei beabstandeten Anlageflächen (40 - 43) zum Abstützen einer das Gerät bedienenden Person, wobei die Rückenstütze einen Grundkörper (46, 51, 73) aufweist, an dem mindestens eine kugelsegmentförmige, eine im Einsatz parallel zur Pedale angeordnete walzensegmentförmige und/oder eine relativ zum Grundkörper bewegliche Anlagefläche (40 - 43) angeordnet ist, wobei mindestens eine Anlagefläche (40 - 43) die Oberfläche einer Kugel (8, 9) oder Walze (47, 48) ist und mindestens eine Anlagefläche (40 - 43) elastisch zum Grundkörper gelagert ist, ***dadurch gekennzeichnet, dass*** die Anlagefläche (40 - 43) elastisch ausgebildet ist und um eine Achse (49, 50) beweglich gelagert ist.

2. Mit einer Pedale angetriebenes Gerät (2) nach Anspruch 1, ***dadurch gekennzeichnet, dass*** der Abstand der Anlageflächen (10, 11) zueinander fixierbar einstellbar ist.

3. Mit einer Pedale angetriebenes Gerät (2) nach Anspruch 1 oder 2, ***dadurch gekennzeichnet, dass*** die Anlageflächen (10, 11) beidseitig der Halterung angeordnet sind.

4. Mit einer Pedale angetriebenes Gerät (2) nach einem der vorhergehenden Ansprüche, ***dadurch gekennzeichnet, dass*** mehrere Anlageflächen (10, 11) zusammen elastisch zum Grundkörper (7) gelagert sind.

5. Mit einer Pedale angetriebenes Gerät (2) nach einem der vorhergehenden Ansprüche, ***dadurch gekennzeichnet, dass*** der Grundkörper (7) mindestens zwei Hebelarme (14, 15) aufweist, die über ein Gelenk (16) einstellbar miteinander verbunden sind.

6. Mit einer Pedale angetriebenes Gerät (2) nach einem der vorhergehenden Ansprüche, ***dadurch gekennzeichnet, dass*** der Grundkörper (7) mindestens zwei Hebelarme (14, 15) aufweist und die Länge mindestens eines der Hebelarme einstellbar ist.

7. Mit einer Pedale angetriebenes Gerät (2) nach einem der vorhergehenden Ansprüche, ***dadurch gekennzeichnet, dass*** der Grundkörper (7) eine Sattelbefestigungseinrichtung (17) zur Befestigung an einem Sattel (4) aufweist.

8. Mit einer Pedale angetriebenes Gerät (2) nach einem der vorhergehenden Ansprüche, ***dadurch gekennzeichnet, dass*** der Grundkörper (7) eine Sattelstangenbefestigungseinrichtung (19) zur Befestigung an einer Sattelstange (3) aufweist.

9. Mit einer Pedale angetriebenes Gerät (2) nach Anspruch 7 und 8, ***dadurch gekennzeichnet, dass*** eine Verbindungsstrebe mit der Sattelbefestigungseinrichtung (17) und der Sattelstangenbefestigungseinrichtung (19) gelenkig verbunden ist.

10. Mit einer Pedale angetriebenes Gerät (2) nach einem der vorhergehenden Ansprüche, ***dadurch gekennzeichnet, dass*** die Rückenstütze mehrere Anlageflächen (10, 11) und zwischen diesen Anlageflächen (10, 11) eine Halterung (24) aufweist.

11. Mit einer Pedale angetriebenes Gerät (2) nach einem der vorhergehenden Ansprüche, ***dadurch gekennzeichnet, dass*** die Rückenstütze eine Sattelabdeckung und/oder ein Fahrradschloss aufweist.

12. Mit einer Pedale angetriebenes Gerät (2) nach einem der vorhergehenden Ansprüche, ***dadurch gekennzeichnet, dass*** die Rückenstütze ein Fahrradlicht aufweist.

13. Mit einer Pedale angetriebenes Gerät (2) nach einem der vorhergehenden Ansprüche, ***dadurch gekennzeichnet, dass*** die Rückenstütze einen Sender aufweist.

14. Mit einer Pedale angetriebenes Gerät (2) nach einem der vorhergehenden Ansprüche, ***dadurch gekennzeichnet, dass*** die Rückenstütze einen Sensor und einen Druckzylinder (74) aufweist, um die Position der Anlagefläche (6) zu verändern, um dadurch den Anpressdruck der Anlagefläche (6) am Rücken eines Nutzers zu variieren.

## Claims

1. A pedal-driven device (2) with a saddle (4) with a backrest with a mount (5) for attachment to the device (2) and at least two spaced apart contact surfaces (40-43) for supporting a person operating the device, wherein the backrest has a base body (46, 51, 73) on which is arranged at least one spherical segment-shaped support surface (40-43), which is roller segment-shaped and arranged parallel to the pedal during use and/or movable relative to the base body, wherein at least one support surface (40-43) is the surface of a sphere (8, 9) or roller (47, 48), and at least one support surface (40-43) is elastically mounted relative to the base body, ***characterized in that*** the support surface (40-43) has an elastic design, and is mounted so that it can move around an axis (49, 50).

2. A pedal-driven device (2) according to claim 1, ***characterized in that*** the distance between the support surfaces (10, 11) can be fixedly adjusted relative to each other.

3. A pedal-driven device (2) according to claim 1 or 2, ***characterized in that*** the support surfaces (10, 11) are arranged on either side of the mounting bracket.

4. A pedal-driven device (2) according to one of the preceding claims, ***characterized in that*** several support surfaces (10, 11) are together elastically mounted relative to the base body (7).

5. A pedal-driven device (2) according to one of the preceding claims, ***characterized in that*** the base body (7) has at least two lever arms (14, 15), which are adjustably connected with each other via a hinge (16).

6. A pedal-driven device (2) according to one of the preceding claims, ***characterized in that*** the base body (7) has at least two lever arms (14, 15), and the length of at least one of the lever arms is adjustable.

7. A pedal-driven device (2) according to one of the preceding claims, ***characterized in that*** the base body (7) has a saddle fastening device (17) for fastening to a saddle (4).

8. A pedal-driven device (2) according to one of the preceding claims, ***characterized in that*** the base body (7) has a saddle post fastening device (19) for fastening to a saddle post (3).

9. A pedal-driven device (2) according to claim 7 and 8, ***characterized in that*** a connecting strut is articulated with the saddle fastening device (17) and the saddle post fastening device (19).

10. A pedal-driven device (2) according to one of the preceding claims, ***characterized in that*** the backrest has several support surfaces (10, 11) and a mounting bracket (24) between these support surfaces (10, 11).

11. A pedal-driven device (2) according to one of the preceding claims, ***characterized in that*** the backrest has a saddle cover and/or a bicycle lock.

12. A pedal-driven device (2) according to one of the preceding claims, ***characterized in that*** the backrest has a bicycle light.

13. A pedal-driven device (2) according to one of the preceding claims, ***characterized in that*** the backrest has a transmitter.

14. A pedal-driven device (2) according to one of the preceding claims, ***characterized in that*** the backrest has a sensor and a pressure cylinder (74) in order to change the position of the contact surfaces (6), so as to thereby vary the contact pressure of the contact surface (6) on the back of a user.

## Revendications

1. Engin (2) entraîné par une pédale, pourvu d'une selle (4) dotée d'un soutien lombaire comprenant un support de montage (5) pour la fixation sur l'engin (2) et au moins deux surfaces d'appui (40 à 43) écartées, assurant l'appui d'une personne se servant de l'engin, le soutien lombaire comportant un corps de base (46, 51, 73) sur lequel est placée au moins une surface d'appui (40 à 43) en forme de segment sphérique, une en forme de segment de rouleau, placée à la parallèle de la pédale et / ou une placée en étant mobile par rapport au corps de base, au moins une surface d'appui (40 à 43) étant la surface d'une sphère (8, 9) ou d'un rouleau (47, 48) et au moins une surface d'appui (40 à 43) étant logée de manière élastique par rapport au corps de base, ***caractérisé en ce que*** la surface d'appui (40 à 43) est conçue en étant élastique et logée en étant mobile autour d'un axe (49, 50).

2. Engin (2) entraîné par une pédale selon la revendication 1, ***caractérisé en ce que*** l'écart mutuel entre les surfaces d'appui (10, 11) est réglable en pouvant être fixé.

3. Engin (2) entraîné par une pédale selon la revendication 1 ou 2, ***caractérisé en ce que*** les surfaces d'appui (10, 11) sont placées de part et d'autre du support de montage.

4. Engin (2) entraîné par une pédale selon l'une quelconque des revendications précédentes, ***caractérisé en ce que*** plusieurs surfaces d'appui (10, 11) sont logées conjointement de manière élastique par rapport au corps de base (7).

5. Engin (2) entraîné par une pédale selon l'une quelconque des revendications précédentes, ***caractérisé en ce que*** le corps de base (7) comporte au moins deux bras de levier (14, 15), qui par l'intermédiaire d'une articulation (16) sont assemblés de manière réglable l'un avec l'autre.

6. Engin (2) entraîné par une pédale selon l'une quelconque des revendications précédentes, ***caractérisé en ce que*** le corps de base (7) comporte au moins deux bras de levier (14, 15) et **en ce que** la longueur d'au moins l'un des bras de levier est réglable.

7. Engin (2) entraîné par une pédale selon l'une quelconque des revendications précédentes, ***caractérisé en ce que*** le corps de base (7) comporte un dispositif de fixation (17) sur la selle, destiné à être fixé sur une selle (4).

8. Engin (2) entraîné par une pédale selon l'une quelconque des revendications précédentes, ***caractérisé en ce que*** le corps de base (7) comporte un dispositif de fixation (19) sur le tube de selle, destiné à être fixé sur un tube de selle (3).

9. Engin (2) entraîné par une pédale selon la revendication 7 et 8, ***caractérisé en ce qu***'une entretoise d'assemblage est assemblée de manière articulée avec le dispositif de fixation (17) sur la selle et le dispositif de fixation (19) sur le tube de selle.

10. Engin (2) entraîné par une pédale selon l'une quelconque des revendications précédentes, ***caractérisé en ce que*** le soutien lombaire comporte plusieurs surfaces d'appui (10, 11) et entre lesdites surfaces d'appui (10, 11) un support de montage (24).

11. Engin (2) entraîné par une pédale selon l'une quelconque des revendications précédentes, ***caractérisé en ce que*** le soutien lombaire comporte une housse de selle et / ou un antivol pour bicyclette.

12. Engin (2) entraîné par une pédale selon l'une quelconque des revendications précédentes, ***caractérisé en ce que*** le soutien lombaire comporte un éclairage de bicyclette.

13. Engin (2) entraîné par une pédale selon l'une quelconque des revendications précédentes, ***caractérisé en ce que*** le soutien lombaire comporte un émetteur.

14. Engin (2) entraîné par une pédale selon l'une quelconque des revendications précédentes, ***caractérisé en ce que*** le soutien lombaire comporte un capteur et un cylindre de pression (74), pour modifier la position de la surface d'appui (6), pour faire varier de ce fait la pression de contact de la surface d'appui (6) sur le dos d'un utilisateur.
